# EUROPEAN PATENT SPECIFICATION

(11) **EP 2 683 974 B1**
(45) Date of publication and mention of the grant of the patent: **18.06.2014**
(21) Application number: 12716567.8
(22) Date of filing: 20.04.2012
(51) Int. Cl.: F16L 1/16

(54) **UNDERWATER PIPELINE RECOVERY METHOD**
BERGUNGSSVERFAHREN FÜR UNTERWASSERROHRLEITUNGEN
PROCÉDÉ DE RÉCUPÉRATION DE CONDUITES SOUS MARINE

(30) Priority: 26.04.2011 GB 201106841
(43) Date of publication of application: 15.01.2014
(73) Proprietor: Technip France, 92400 Courbevoie (FR)
(72) Inventor: TOUGH, Gordon, Westhill, Scotland (GB)
(74) Representative: Earnshaw, Geoffrey Mark
(86) International application number: PCT/GB2012/050862
(87) International publication number: WO 2012/146911

(56) References cited:
- WO-A1-03/042594
- FR-A1- 2 468 827
- GB-A- 2 214 259
- US-A- 5 044 827

## Description

The present invention relates to a method of recovering an underwater pipeline, in particular an underwater decommissioned hydrocarbon pipeline, as well as to a pipeline recovery assembly.

As some oil and gas fields reach maturity, and some decommissioning of underwater pipelines is carried out. Where there is space on the seabed, it may be possible to leave the decommissioned pipelines in place after their cleaning, with possible burial in the seabed. However, this becomes more difficult where field-life extension is required, and/or it is desired to lay more pipelines in the same area. This is especially in congested fields, where clear pipelay corridors are usually required on the seabed.

In such situations, pipeline 'recovery' is required, generally being removal of the pipeline from the seabed back onto a vessel. However, pipelines are generally very long, and may be corroded and liable to disintegration.

GB2214259A shows removal of a pipeline from the bottom of a body of water by raising an end portion of a pipe to a level above the surface of the water, clamping the pipeline on a vessel at a position below the end portion, severing the end portion above the clamp, and removing the severed end portion, and continuing to repeat said steps.

US5044827 also shows a method for severing and recovering a submerged pipeline based on severing the pipeline on the seabed followed by providing a cable from a lay barge, connecting it to the recovery head of the pipeline and retrieving the pipeline to the water's surface.

However, both of the methods of GB2214259 and US5044827 rely on the integrity of the pipeline to remain intact during recovery, especially during the stresses applied to it in the catenary lifting of one end, with the remainder of the pipeline seemingly still on the sea floor. This may be possible during the recovery of small or short pipelines, but not larger or longer pipelines. Moreover, GB2214259 required the integrity of the pipeline to be maintained during all the severing operations, as well as the time involved for such operations.

The extent of any corrosion is a significant factor in considering the recovery of older pipelines. Such corrosion may not be noticeable or otherwise apparent whilst the pipeline remains in its laid position (usually for many years), usually being completely supported by the seabed. However, stresses applied during the recovery of a pipeline, especially through the catenary configuration up to the vessel, will significantly increase the possible failure of the integrity of the pipeline at locations having corrosion. Simple recovery of a corroded pipeline by the hoisting of one end to a vessel has been known to lead to the disintegration of one or more parts of the pipeline, with the possibility of complete breakage, requiring a second recovery operation.

It would also be preferable to be able to increase the integrity of the pipeline during recovery, recover longer pipelines in a single operation, as well as to directly gather such pipelines onto a recovery vessel without requiring a series of pipeline-severing operations either on board, or on the seabed.

It is an object of the present invention to provide an improved method of recovering an underwater pipeline.

Thus, according to one aspect of the present invention, there is provided a method of recovering an underwater pipeline comprising at least the steps of:
(a) locating a recovery cable through the pipeline;
(b) fixing each end of the recovery cable to each end of the pipeline; and
(c) recovering the pipeline.

In this way, a positive and flexible connection between each end of the pipeline via the recovery cable assists maintaining the structure and integrity of the pipeline during its recovery from a seabed.

Pipelines able to be recovered by the method of the present invention may have any suitable size, shape and design, as long as a recovery cable can be located therethrough. Such pipelines include pipelines used in the transport and recovery of hydrocarbons, including oil and gas pipelines, as well as any support or subsidiary pipelines therefor. Such pipelines may include pipe-in-pipe pipelines. Such pipelines may have any number of layers, often including at least an inner pipeline, one or more protective layers, and an outer pipeline. The invention is not limited by the nature of the pipeline.

Where it is intended to recover a pipeline straight onto a reel or in or to another transport arrangement, such pipeline should have the expected properties to be transported in that manner. For example, a pipeline to be recovered onto a reel should be 'reelable', i.e. having at least the nominal properties to allow the pipeline to be bent to the required strain levels onto the reel.

The pipeline may have any suitable length able to be recovered in a single recovery operation. The present invention is able to recover pipelines of a much greater single length than conventionally possible where the pipeline is only recovered by the lifting or hoisting of one end. Thus, single-length pipelines able to be recovered by the present invention may be up to 1km, or up to 2, 3, 4 or 5km, or longer. It may still be desired to cut a very long pipeline to be recovered into one or more sections for separate recovery operations, but it is still an advantage of the present invention to recover longer sections of such pipelines than conventional recovery operations.

The depth of the pipeline underwater is not a limiting feature of the present invention, such that the present invention is operable in all of shallow, medium or deep depth of water.

The recovery cable useable in the present invention may have any suitable size and structure, generally having a strength and integrity suitable for remaining between the ends of a pipeline during a method of recovery, especially during the periods of high stress as such a pipeline is in that catenary, and/or being spooled onto a reel. Suitable examples include various forms of wire, such as the winch wires used on current pipelay vessels.

In one embodiment of the present invention, the method further comprises tensioning the recovery cable in the pipeline. Tensioning a recovery cable in a pipeline is achievable using a number of methods or processes, some of which are described hereinafter, and which are not limiting to the present invention.

Tensioning the recovery cable in the pipeline increases the maintenance of the integrity of the pipeline during its recovery from a seabed.

The recovery of the pipeline by the present invention may be to a shallower water depth allowing greater or easier access thereto for further recovery operations, and/or to above the water surface.

The recovery of the pipeline by the present invention more preferably comprises completely spooling the pipeline onto a reel. The reel may be on a floating vessel having one or more pipeline reels, such vessels being known in the art. The direct reeling of a pipeline onto a reel simplifies the recovery operation, and allows easier transport and relocation of the pipeline after its recovery. The longer the single length of pipeline being recovered, the greater this benefit is.

By spooling the recovered pipeline directly onto a reel, and being able to maintain the integrity of the pipeline during the spooling process, the present invention improves known recovery operations either by the length of pipeline recoverable in a single operation, or by decrease of recovery time, increasing safety, and/or by increasing the maintenance of the integrity of the pipeline onto a reel. The flexible nature of the recovery cable allows the support provided by the recovery cable to the pipeline to continue during the high stresses that occur during pipeline reeling, and so maintain the support to the integrity of the pipeline during such stresses.

According to one embodiment of the present invention, the method further comprises locating a plug into at least one end of the pipeline. Such a plug provides a convenient manner of fixing an end of a recovery cable to the end of a pipeline.

Preferably, the method of the present invention comprises locating a plug into both ends of the pipeline, to assist fixing each end of the recovery cable to each end of the pipeline.

Methods of locating an elongate line through the bore of a pipeline are known in the art, and the skilled man will be aware of several options. One non-limiting option is the step of locating a smaller or 'messenger' line through the pipeline, to then attach and locate the recovery line through the pipeline. Messenger lines are known in the art, and generally have a smaller size, in particular smaller diameter, than the recovery cable, to allow for easier passage through the pipeline. Methods of locating a messenger line through a pipeline are also well known in the art, and can be carried out using pig and the like, or otherwise pulled through the bore in a manner known in the art.

More than one vessel could be used to provide the present invention, optionally providing different features or functions in support. Recovery of the pipeline onto a vessel could be over en edge or the stern, or through a moonpool or the like. Recovery may be based on the same or similar apparatus and equipment used to a lay a pipeline, and the same or a similar pathway as a pipelaying pathway.

In particular, the present invention is able to recover a corroded pipeline. Such pipelines may be corroded through age, damage or a fault in manufacture, and recovery of corroded pipelines by the lifting or hoisting of only one end has resulted in fracture of such pipelines during high stress periods of the recovery process, requiring extensive further work to complete the recovery the fractured pipeline or pipeline sections that remain.

According to one embodiment of the present invention, there is provided a method as herein defined comprising the steps of:
(i) flushing and disconnecting the pipeline;
(ii) installing pigging heads on one or both ends of the pipeline;
(iii) pigging a lightweight messenger wire into the pipeline from one end;
(iv) connecting the end of the messenger wire to the recovery cable and pulling the recovery cable through the pipeline;
(v) connecting the far end of the recovery cable to a first plug, and pulling the recovery cable to position the first plug against the far end of the pipeline;
(vi) installing a second plug at the near end of the pipeline and connecting the near end of the recovery cable to the second plug;
(vii) tensioning the recovery cable;
(viii) pulling one end of the pipeline to recover the pipeline to a vessel; and
(ix) spooling the complete pipeline onto a reel for storage.

According to another aspect of the present invention, there is provided a pipeline recovery assembly comprising two plugs locatable at each end of the pipeline and a recovery cable thereinbetween able to maintain the integrity of the pipeline during recovery of the pipeline from underwater, such as the seabed, to above the water surface, and optionally directly onto a spooling reel.

An embodiment of the present invention will now be described by way of example only and with reference to the accompanying diagrammatic drawings in which:
Figure 1 is a side schematic view of a floating vessel and underwater pipeline on a seabed intended to be recovered according to an embodiment of the present invention;
Figures 2a-2f are six consecutive figures showing some steps of a method of recovering an underwater pipeline according to an embodiment of the present invention;
Figure 3 is a similar view to Figure 1 following the steps of Figures 2a-2f;
Figure 4 shows the progression of the illustrated method of the present invention following Figures 1 and 3; and
Figure 5 is a side schematic view of an embodiment of the present invention using two vessels.

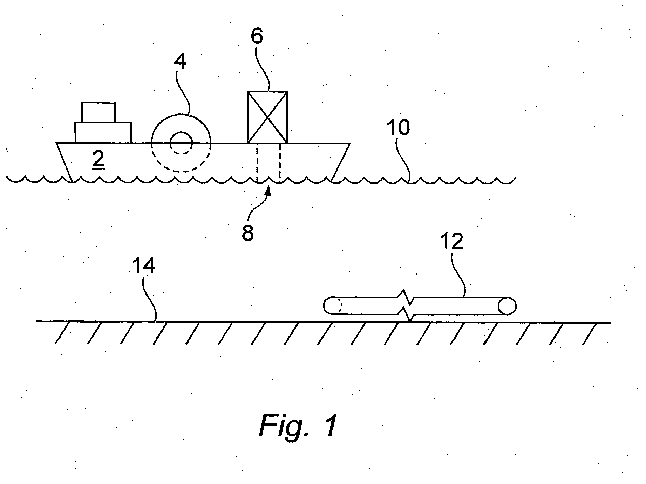

Referring to the drawings, Figure 1 shows a floating vessel 2, such as a laying or recovery vessel, having a pipeline reel 4, tower 6 and moon pool 8, on a sea surface 10.

Figure 1 also shows an underwater pipeline 12 of extensive length, such as around 5km. Such a pipeline may be being decommissioned. It is increasingly intended, especially in congested oil and gas fields, to make space for new pipelines so that pipelay corridors for new pipelines are not over-congested, and having to avoid existing pipelines, including decommissioned pipelines only buried in the seabed and not fully removed.

The underwater pipeline 12 in Figure 1 lies on a seabed 14 and is intended to be recovered by the vessel 2.

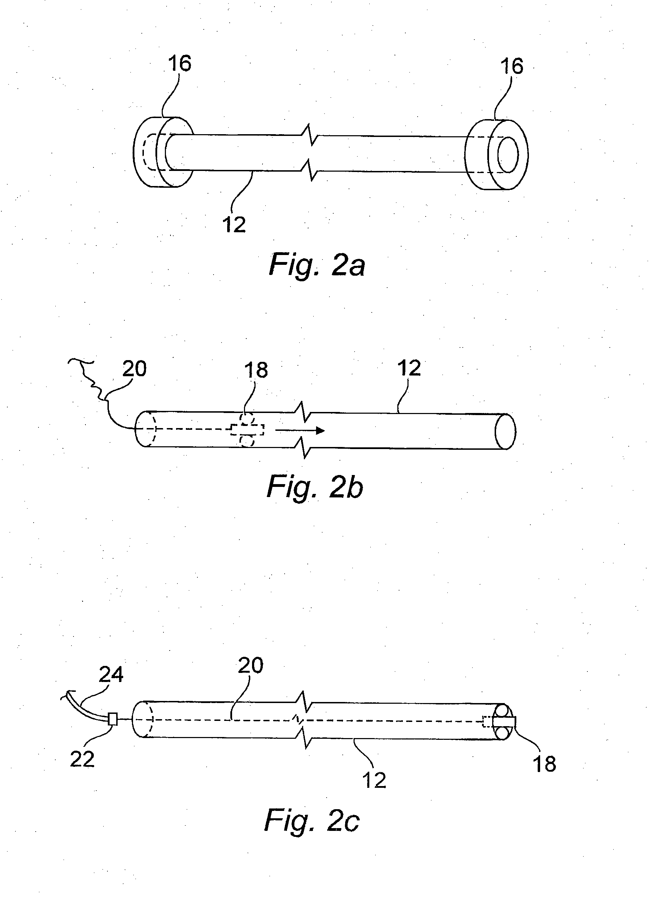

Figures 2a-2f show the underwater pipeline 12 in isolation, to better show some steps of the method of the present invention.

Figure 2a shows the pipeline 12 as a single and separated unit. The pipeline 12 may have been separated or otherwise cut from other equipment, apparatus or units underwater, such as a wellhead, etc., and/or cut from an even longer existing pipeline. The provision of an extended length of pipeline ready for recovery is well known in the art, including the disconnection of any end pieces or connecting pieces such as flanges and the like.

Optionally, the pipeline 12 has been cleaned or flushed, and then allowed to be flooded with free-draining with sea water.

Figure 2a shows the application (by a diver or ROV, etc.) of a pigging head 16 at each end of the pipeline 12. Such pigging heads 16 may only be required at one end of the pipeline 12, depending on the method of locating the recovery cable as described hereinafter, and/or the availability of divers or ROVs. Figures 2b-2f do not subsequently show the pigging head 16 for clarity.

Figure 2b shows the introduction and passage of a pig 18 and an attached light weight messenger wire 20 into and from one (relatively near) end of the pipeline 12. The nature and progression of pigs through a pipeline is well known in the art.

Figure 2c shows the progression of the pig 18 to the other (far or distal) end of the pipeline 12, and the connection of the near end of the messenger line 20 (via a suitable connection 22) to a recovery cable 24. The other end of the recovery cable 24 is attached to the vessel 2.

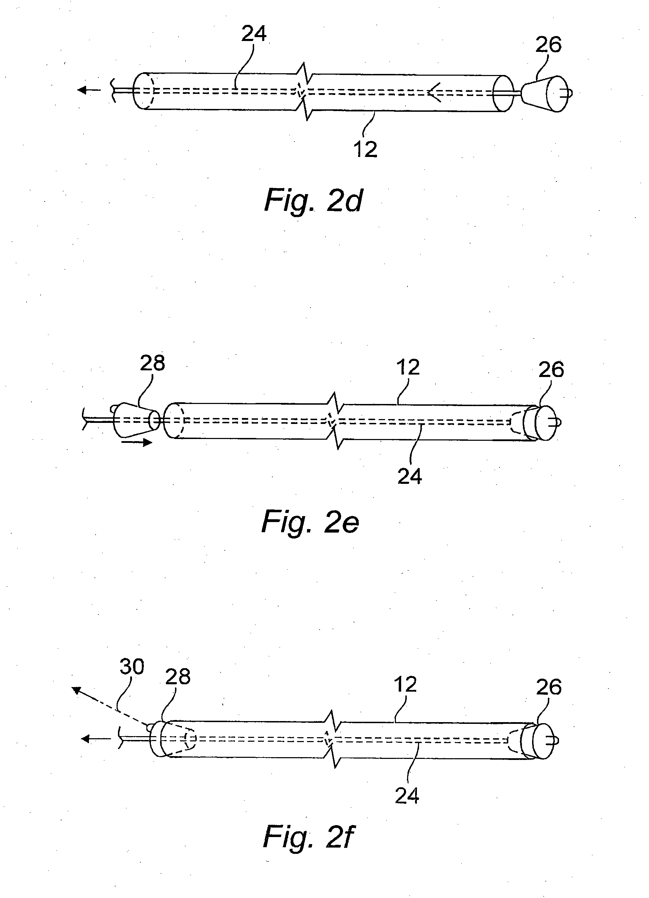

Figure 2d shows the completion of the passage of the recovery cable 24 through the pipeline 12 to the other end. Following the completion of the location of the recovery cable 24, the messenger cable 20 is disconnected therefrom, and the far end of the recovery cable 24 attached to a first plug 26.

The first plug 26 may be any suitable plug generally able to part-fit within the bore of the far end of the pipeline 12. Suitable gripping plugs and the like are known in the art.

Following attachment of the recovery cable 24 to the first plug 26, pulling of the recovery cable 24 backwardly, generally by the operation of one or more winches on the vessel 2, pulls the first plug 26 into engagement with the far end of the pipeline 12, preferably into a relatively tight fitting engagement with the bore of the pipeline, in the general nature of plugs.

Figure 2e shows the attachment of a second plug 28 onto the recovery cable 24 of the near end of the pipeline 12. Again, suitable plugs are well known in the art, one non-limiting example being a carpenter stopper, generally having or being a wedge designed to accommodate a suitable line or wire therethrough.

The second plug 28 can then be brought into fitting and securement with the near end of the pipeline 12, such that the pipeline 12 now has first and second plugs 26, 28 secured at both ends, and a recovery cable 24 running the entire length of the pipeline 12 thereinbetween.

Preferably, tension can now be applied to the recovery cable 12 by further pulling of the recovery cable 24 through the second plug 28, and relying on the nature of the second plug 28 to maintain the tension. A carpenter stopper plug includes a wedge such that as load is applied to the recovery cable 24, the wedge slides deeper into the taped housing of the pipeline 12 against the position of the recovery cable 24.

Figure 2f shows the pipeline 12 with a tensioned recovery cable 24 between the two end plugs 26 and 28, ready for recovery. The recovery may be achieved by pulling of the recovery cable 24 outside the pipeline 12, or by one or more separate recovery lines 30 known in the art, or through a combination of same.

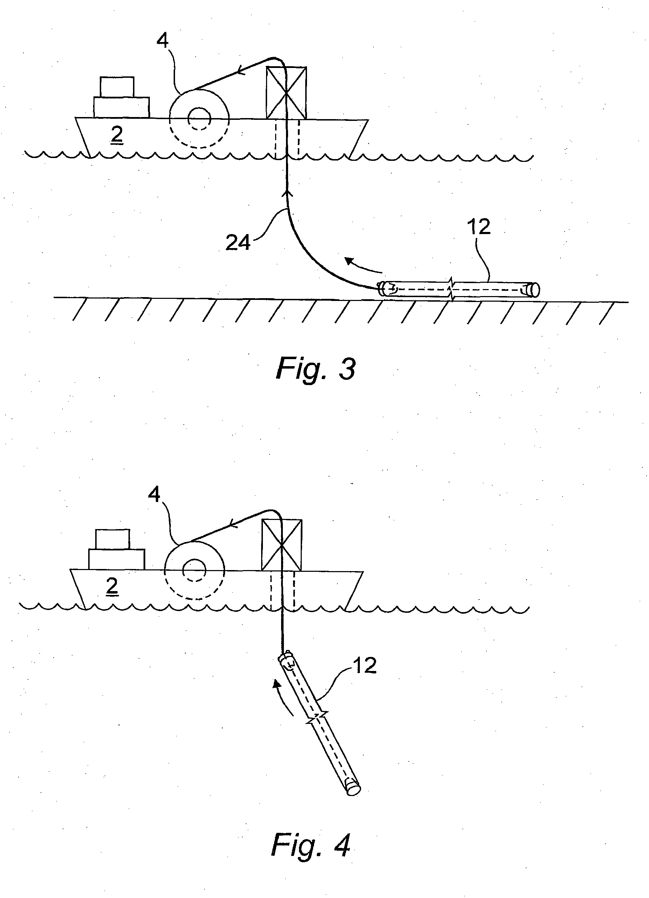

Figure 3 shows the floating vessel 2 of Figure 1, and the pipeline 12 now in the form shown in Figure 2f having a tensioned recovery cable 24 therein. Recovery of the pipeline 12 can now commence using the recovery cable 24 between the vessel 2 and the pipeline 12 and/or one or more other lifting lines 30 (not shown in Figure 3) thereinbetween, to recover the pipeline up to the water surface and directly onto the reel 4 on the vessel 2, as further shown in Figure 4.

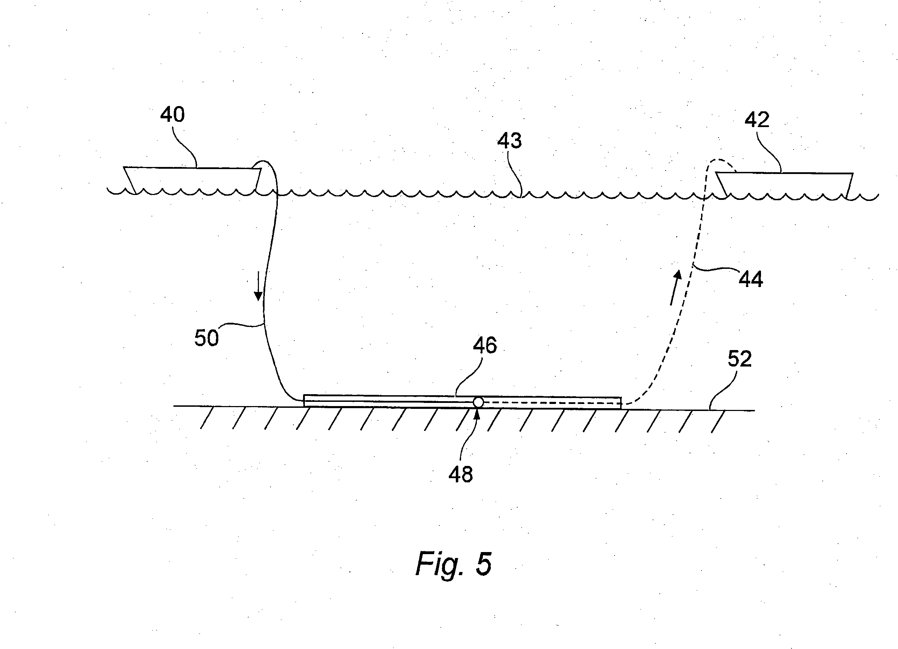

Figure 5 shows two further floating vessels 40, 42 on a surface 43, either or both being pipelaying or support vessels, wherein one vessel 42 is able to reel in a messenger cable 44 already laid through a pipeline 46, and attached by a suitable connection 48 to a recovery cable 50 being reeled out from the other vessel 40 in a simultaneous manner, to provide the recovery cable 50 through the pipeline 46 intended to be recovered from the sea bed 52.

The present invention is able to recover pipelines of around 5km in a single operation and maintains the integrity of the pipeline during the high stresses that are applied to the pipeline in the catenary configuration (as shown in Figure 4), and when the pipeline is then directly spooled onto a reel. Corroded or old pipelines may and have fractured as a result of the stresses that occur during a recovery operation. The present invention provides a method of providing additional and flexible strength and support to the pipeline during the recovery operation, to avoid or reduce any failure of the pipeline between the seabed and the surface. This maintains the pipeline as a single entity, especially through the catenary configuration, and/or allows for longer pipelines to be recoverable. Furthermore, the pipeline can be directly spooled onto a reel, usually over the aligner on a vessel, because possible structural failure of the pipeline can again be restrained by the flexible strength and support of the recovery cable.

The degree of tension that is required in the cable will be defined by pipeline and pipe lay analysis, and is generally based on the pipeline size, coating and the water depth. A tension of 50-100 tonnes is typical for a North Sea or West of Shetland application. Preferably, the pipeline is recovered in a flooded and free draining condition.

The present invention provides the ability to reinforce the integrity of a weak or otherwise corroded pipeline by the installation of a flexible recovery cable through the pipeline and secured to its ends before its recovery to near or above the surface. This increases the economically preferred single operation for recovery of old and weak pipelines, (preferably having a longer length than conventionally possible), which is becoming increasingly required, especially in congested fields of oil and gas exploration.

## Claims

1. A method of recovering an underwater pipeline (12) comprising at least the steps of:
(a) locating a recovery cable (24) through the pipeline;
(b) fixing each end of the recovery cable to each end of the pipeline; and
(c) recovering the pipeline.

2. A method as claimed in claim 1 further comprising tensioning the recovery cable (24) in the pipeline (12).

3. A method as claimed in claim 1 or claim 2 further comprising recovering the pipeline (12) to above the water surface (43).

4. A method as claimed in claim 3 further comprising spooling the pipeline (12) onto a reel (4).

5. A method as claimed in any one of the preceding claims further comprising locating a plug (26) into at least one end of the pipeline (12).

6. A method as claimed in claim 5 comprising locating a plug (26, 28) into both ends of the pipeline (12).

7. A method as claimed in claim 5 or claim 6 comprising fixing at least one end of the recovery cable (24) to a plug (26).

8. A method as claimed in claim 7 comprising fixing both ends of the recovery cable (24) to plugs (26, 28) at each end of the pipeline (12).

9. A method as claimed in any one of the preceding claims wherein the pipeline (12) is up to 5km or 6km long.

10. A method as claimed in any one of the preceding claims further comprising the step of locating a messenger line (20) though the pipeline (12) to then locate the recovery cable (24) through the pipeline.

11. A method as claimed in any one of the preceding claims for recovering a corroded pipeline.

12. A method as claimed in any one of the preceding claims comprising the steps of
(i) flushing and disconnecting the pipeline (12);
(ii) installing pigging heads (16) on one or both ends of the pipeline;
(iii) pigging a lightweight messenger wire (20) into the pipeline from one end;
(iv) connecting the end of the messenger wire to the recovery cable (24) and pulling the recovery cable through the pipeline;
(v) connecting the far end of the recovery cable to a first plug (26), and pulling the recovery cable to position the first plug against the far end of the pipeline;
(vi) installing a second plug (28) at the near end of the pipeline and connecting the near end of the recovery cable to the second plug;
(vii) tensioning the recovery cable;
(viii) pulling one end of the pipeline to recover the pipeline to a vessel (2); and
(ix) spooling the complete pipeline onto a reel (4) for storage.

## Patentansprüche

1. Ein Verfahren zum Bergen einer Unterwasserrohrleitung (12), das mindestens die folgenden Schritte beinhaltet:
(a) Anordnen eines Bergungskabels (24) durch die Rohrleitung;
(b) Befestigen jedes Endes des Bergungskabels an jedem Ende der Rohrleitung; und
(c) Bergen der Rohrleitung.

2. Verfahren gemäß Anspruch 1, das ferner das Spannen des Bergungskabels (24) in der Rohrleitung (12) beinhaltet.

3. Verfahren gemäß Anspruch 1 oder Anspruch 2, das ferner das Bergen der Rohrleitung (12) nach über die Wasseroberfläche (43) beinhaltet.

4. Verfahren gemäß Anspruch 3, das ferner das Aufwickeln der Rohrleitung (12) auf eine Spule (4) beinhaltet.

5. Verfahren gemäß einem der vorhergehenden Ansprüche, das ferner das Anordnen eines Stopfens (26) in mindestens einem Ende der Rohrleitung (12) beinhaltet.

6. Verfahren gemäß Anspruch 5, das das Anordnen eines Stopfens (26, 28) in beiden Enden der Rohrleitung (12) beinhaltet.

7. Verfahren gemäß Anspruch 5 oder Anspruch 6, das das Befestigen mindestens eines Endes des Bergungskabels (24) an einem Stopfen (26) beinhaltet.

8. Verfahren gemäß Anspruch 7, das das Befestigen beider Enden des Bergungskabels (24) an den Stopfen (26, 28) an jedem Ende der Rohrleitung (12) beinhaltet.

9. Verfahren gemäß einem der vorhergehenden Ansprüche, wobei die Rohrleitung (12) bis zu 5 km oder 6 km lang ist.

10. Verfahren gemäß einem der vorhergehenden Ansprüche, das ferner den Schritt des Anordnens eines Rückholseils (20) durch die Rohrleitung (12) beinhaltet, um dann das Bergungskabel (24) durch die Rohrleitung anzuordnen.

11. Verfahren gemäß einem der vorhergehenden Ansprüche zum Bergen einer korrodierten Rohrleitung.

12. Verfahren gemäß einem der vorhergehenden Ansprüche, das die folgenden Schritte beinhaltet:
(i) Spülen und Abkuppeln der Rohrleitung (12);
(ii) Installieren von Molchköpfen (16) auf einem oder beiden Enden der Rohrleitung;
(iii) Molchen eines leichten Rückholseils (20) in die Rohrleitung von einem Ende;
(iv) Kuppeln des Endes des Rückholseils mit dem Bergungskabel (24) und Ziehen des Bergungskabels durch die Rohrleitung;
(v) Kuppeln des fernen Endes des Bergungskabels mit einem ersten Stopfen (26) und Ziehen an dem Bergungskabel, um den ersten Stopfen gegen das ferne Ende der Rohrleitung zu positionieren;
(vi) Installieren eines zweiten Stopfens (28) am nahen Ende der Rohrleitung und Kuppeln des nahen Endes des Bergungskabels mit dem zweiten Stopfen;
(vii) Spannen des Bergungskabels;
(viii) Ziehen an einem Ende der Rohrleitung, um die Rohrleitung zu einem Wasserfahrzeug (2) zu bergen; und
(ix) Aufwickeln der gesamten Rohrleitung auf eine Spule (4) zur Lagerung.

## Revendications

1. Un procédé de dépose d'un pipeline immergé (12) comprenant au moins les étapes de :
(a) positionnement d'un câble de dépose (24) dans le pipeline ;
(b) fixation de chaque extrémité du câble de dépose à chaque extrémité du pipeline ; et
(c) dépose du pipeline.

2. Un procédé tel que revendiqué dans la revendication 1 comprenant en sus la mise sous tension du câble de dépose (24) dans le pipeline (12).

3. Un procédé tel que revendiqué dans la revendication 1 ou la revendication 2 comprenant en sus la dépose du pipeline (12) jusqu'à ce qu'il se trouve au-dessus de la surface de l'eau (43).

4. Un procédé tel que revendiqué dans la revendication 3 comprenant en sus l'enroulement du pipeline (12) sur une bobine (4).

5. Un procédé tel que revendiqué dans l'une quelconque des revendications précédentes comprenant en sus le positionnement d'un bouchon (26) dans au moins une extrémité du pipeline (12).

6. Un procédé tel que revendiqué dans la revendication 5 comprenant le positionnement d'un bouchon (26, 28) dans les deux extrémités du pipeline (12).

7. Un procédé tel que revendiqué dans la revendication 5 ou la revendication 6 comprenant la fixation d'au moins une extrémité du câble de dépose (24) à un bouchon (26).

8. Un procédé tel que revendiqué dans la revendication 7 comprenant la fixation des deux extrémités du câble de dépose (24) à des bouchons (26, 28) à chaque extrémité du pipeline (12).

9. Un procédé tel que revendiqué dans l'une quelconque des revendications précédentes dans lequel le pipeline (12) fait jusqu'à 5 km ou 6 km de long.

10. Un procédé tel que revendiqué dans l'une quelconque des revendications précédentes comprenant en sus l'étape de positionnement d'un filin porte-amarre (20) dans le pipeline (12) pour ensuite positionner le câble de dépose (24) dans le pipeline.

11. Un procédé tel que revendiqué dans l'une quelconque des revendications précédentes pour déposer un pipeline corrodé.

12. Un procédé tel que revendiqué dans l'une quelconque des revendications précédentes comprenant les étapes de :
(i) rinçage et débranchement du pipeline (12) ;
(ii) installation de têtes de ramonage (16) sur une extrémité ou les deux du pipeline ;
(iii) ramonage par passage d'un fil porteur léger (20) dans le pipeline depuis une extrémité ;
(iv) raccordement de l'extrémité du fil porteur au câble de dépose (24) et traction du câble de dépose dans le pipeline ;
(v) raccordement de l'extrémité éloignée du câble de dépose à un premier bouchon (26), et traction du câble de dépose pour mettre en place le premier bouchon contre l'extrémité éloignée du pipeline ;
(vi) installation d'un deuxième bouchon (28) au niveau de l'extrémité proche du pipeline et raccordement de l'extrémité proche du câble de dépose au deuxième bouchon ;
(vii) mise sous tension du câble de dépose ;
(viii) traction d'une extrémité du pipeline pour déposer le pipeline jusqu'à un navire (2) ; et
(ix) enroulement du pipeline tout entier sur une bobine (4) pour entreposage.
